# FASCICULE DE BREVET EUROPEEN

(11) **EP 0 380 414 B1**
(45) Date de publication et mention de la délivrance du brevet: **20.07.1994**
(21) Numéro de dépôt: 90400206.0
(22) Date de dépôt: 24.01.1990
(51) Int. Cl.: G01N 25/48

(54) **Procédé d'analyse des spectres de relaxation et des résonances dans les matériaux**
Verfahren zur Untersuchung von Relaxationsspektren und Resonanzen in Materialien
Method for analysing the relaxation spectra and the resonances in materials

(30) Priorité: 26.01.1989 FR 8900950
(43) Date de publication de la demande: 01.08.1990
(73) Titulaire: SOLOMAT PARTNERS L.P., Stamford, CT 06906 (US)
(72) Inventeur: Ibar, Jean-Pierre, Stamford CT 06906 (US)
(74) Mandataire: W.P. THOMPSON & CO.

(56) Documents cités:
- EP-A- 0 346 968
- DE-A- 3 511 778
- US-A- 3 554 001

## Description

La présente invention concerne un procédé d'analyse des spectres de relaxation et des résonances dans les matériaux, par thermo-stimulation suivant un programme de variation de température.

On connaît déjà de tels procédés d'analyse.

De tels procédés connus qui seront examinés de manière plus détaillée ci-après ont pour but la connaissance des matériaux par l'étude des temps de relaxation dans les matériaux qui permet de différencier les types de matériaux entre eux et d'optimiser leurs performances mécanique, électrique, magnétique, etc...

Or, les phénomènes de "relaxation" dans les matériaux sont le résultat de mouvements internes dus à une perturbation d'ordre soit mécanique, électrique ou électromagnétique.

Les matériaux mis en forme ayant des propriétés mécaniques, électriques, magnétiques, etc.. qui dépendent des mouvements moléculaires, électriques, magnétiques, etc.., au sein même de leur structure interne, que ce soit au niveau des macromolécules, molécules, atomes, ou noyaux qui constituent cette matière.

On peut distinguer essentiellement trois types de méthodes pour étudier les temps de relaxation dans les matériaux :
1) méthodes de résonance
2) méthodes d'analyse d'amortissement
3) méthodes thermo-stimulées.

Dans les méthodes de résonance, une excitation périodique, d'ordre mécanique, électrique ou magnétique, etc, est imposée au matériau à une température et une pression déterminées. La fréquence de l'excitation périodique est ajustable et permet de déterminer la fréquence de résonance du mouvement interne permis à cette température.

Une méthode alternative fréquemment utilisée consiste à soumettre le matériau à une excitation de fréquence déterminée et de programmer une variation de température. Lorsque la température atteint un niveau susceptible de permettre les mouvements que l'on cherche à observer, on observe un pic de résonance pour la fréquence d'excitation choisie. Il est possible d'opérer à diverses fréquences (fixes) et d'analyser ainsi la dépendance temps-température, ou fréquence-température, ce qui permet d'accéder au mécanisme responsable des mouvements internes observés.

Dans bien des cas, les mouvements internes sont contrôlés cinétiquement par des phénomènes d'activation par la température (phénomènes d'Arrhenius -Eyring), et les variations de la fréquence du pic de résonance (fm) avec la température du maximum du pic Tₘ sont représentés graphiquement par un diagramme dit d'Arrhenius représentant en ordonnées Log(fm) et en abcisses 1/Tₘ, (Tₘ en degrés Kelvin).

La linéarité des diagrammes d'Arrhenius est indicatrice d'un phénomène activé. La pente de la droite d'Arrhenius est liée à l'enthalpie d'activation du processus libéré lors des mouvements observés, et l'ordonnée à l'origine est proportionnelle à l'entropie d'activation, et à la fréquence de sauts entre deux états activés. L'étude des valeurs des enthalpies et entropies d'activation permet de déterminer l'origine des mouvements à l'intérieur du matériau, que ces mouvements soient d'origine visqueuse, atomique, ou sub-atomique (nucléaire). Les mouvements de type visqueux sont particulièrement bien mis en évidence par des procédés de déformation mécanique, ou ultra-sonores alors que les mouvements de charges électriques sont étudiés par application de champs électriques, et les mouvements nucléaires par application d'excitations électromagnétiques.

Les méthodes d'analyse qui utilisent l'amortissement consistent à exciter le matériau pendant un certain temps à une certaine température, à interrompre l'excitation et analyser la courbe de retour à l'équilibre (courbe de rétablissement) de façon à déterminer l'atténuation à cette température.

On peut faire varier la fréquence d'excitation avant rétablissement, ainsi que la température de travail, ce qui permet de déterminer les plages de température et de fréquence où les mouvements internes peuvent s'établir. Comme précédemment, les origines des mouvements peuvent être obtenues par étude des diagrammes Arrhenius correspondants.

Les méthodes dites "thermo-stimulées", comprennent des méthodes purement calorimétriques et des méthodes qui allient l'influence de la température et d'une variable "stimulante", qui peut être une variable mécanique, électrique ou électromagnétique.

La microcalorimétrie différentielle (DSC) ou analyse thermique différentielle (ATD) consistent à comparer les flux d'énergie à fournir à deux coupelles situées dans une même atmosphère thermostatée, dispositif dans lequel une des deux coupelles contient le matériau à étudier. La température de l'enceinte peut être programmée en montée de température, en descente, ou en isotherme. L'appareil est servo-régulé de manière que la température des deux coupelles soit rigoureusement identique. Le flux énergétique variable fourni ou soustrait à la coupelle contenant le matériau à étudier est enregistré en fonction de la température de l'enceinte thermique (DSC). Dans une variante du procédé (ATD), la différence de température entre les deux coupelles est enregistrée pour un changement programmé de la température de l'enceinte. La différence de température entre les deux coupelles change lors d'un changement de structure physique accompagné d'une variation d'enthalpie à l'intérieur du matériau. Dans une analyse par DSC, le flux calorimétrique change lors d'un changement d'état thermodynamique dû à des mouvements internes, par exemple des relaxations moléculaires.

La microcalorimétrie différentielle est une méthode rapide et élégante pour la détermination des transitions de phase dans les matériaux, par exemple pour la détermination des températures de fusion et solidification, et des transitions vitreuses dans les phases amorphes de matériaux non cristallisés ou semi-cristallins. Dans cette technique d'analyse, la température joue essentiellement deux rôles, celui de stimulateur par apport d'énergie thermique susceptible d'initier des mouvements internes activés, et celui de capteur, par mesure comparative de la température après apport d'enthalpie secrété par le matériau lui-même. (lorsque l'instrument de mesure travaille en flux calorifique et non en température, la température est encore la variable de comparaison qui dirige le montant relatif d'apport énergétique (de flux caloriporteur) sur la coupe de l'échantillon).

Une variante de ce procédé consiste à obtenir des courbes de capacité calorifique en fonction de la température, sous différentes pressions atmosphériques. En effet, la pression atmosphérique joue un rôle important sur la cinétique des phénomènes de relaxation. Il est couramment établi qu'un accroissement de pression s'accompagne d'une restriction des mouvements internes, ce qui est perçu en microcalorimétrie différentielle par un accroissement de la température à laquelle les mouvements internes se libèrent lors d'une analyse thermique. Des appareils actuellement commercialisés permettent d'obtenir les courbes de microcalorimétrie sous atmosphère pressurisée. La pression reste constante pendant le cycle de chauffe ou de refroidissement de ces analyses.

Une autre branche importante d'instruments de mesure des mouvements internes dans les matériaux par effet thermo-stimulé est décrite dans les travaux de plusieurs auteurs, et concerne les techniques de courants thermo-stimulés (CTS), et les techniques de fluage thermo-stimulées (FTS). Ces techniques sont relativement originales par rapport aux techniques précédemment décrites. La température y joue le rôle de révélateur, alors que les variables externes imposées lors du stade d'excitation jouent le rôle de "marqueur".

Dans une variante du procédé, plus longuement décrite plus loin, la température joue également le rôle de "filtre" des temps de relaxation : c'est la méthode de "filtrage thermique". L'excitation, sous forme de champ mécanique, électrique, ou magnétique, etc.. imposé sur le matériau à une certaine température, a pour but "d'orienter", ou plus généralement de porter le système hors d'équilibre par effet de champ sur la valeur de l'énergie d'activation, et sur l'entropie d'activation. L'intensité du champ imposé reste fixe pendant un certain temps, le temps pour le nouvel état d'équilibre de s'établir, et la température est abaissée à grande vitesse (trempe) jusqu'à une température à laquelle l'état thermodynamique du matériau établi à haute température n'a plus la possibilité, pour des raisons cinétiques, de se modifier ; par conséquent on a un "gel thermocinétique" de l'état obtenu à haute température. L'analyse par effet thermostimulé consiste à supprimer le champ aux basses températures, et à réchauffer le matériau, libre de toute contrainte, pour libérer les mouvements internes de retour à l'équilibre stimulés par la température. La cinétique de retour à l'équilibre est révélatrice des mouvements internes invoqués, et la température à laquelle ils deviennent visibles est fonction des paramètres de fabrication du matériau ainsi que de sa structure chimique et de sa morphologie. Les méthodes d'effet thermo-stimulé révèlent l'ensemble des mouvements de relaxation de manière globale : dans le cas où les mouvements à analyser ne sont pas "simples", au sens d'une relaxation pure du type Debye, et pour un spectre de relaxations élémentaires dont le couplage interactif est responsable de la réponse globale du matériau, il est très difficile de faire correspondre à un type de relaxation donné une propriété physique inhérente à ce mouvement . L'ensemble de la réponse à l'excitation étant global, il est généralement indispensable de définir une "distribution de temps de relaxation" correspondant, par analogie, à différents résonateurs couplés. Le couplage entre les modes élémentaires de relaxation est également sujet à une cinétique spécifique, elle-même fonction des paramètres structuraux, chimiques et morphologiques. La description des modes élémentaires, leurs caractéristiques thermo-cinétiques (énergie d'activation et entropie) et la description de leur couplage, est essentielle pour la compréhension des propriétés macroscopiques des matériaux.

Les procédés CTS (courant thermo-stimulé) et FTS (fluage thermo-stimulé) sont des techniques d'effet thermo-stimulé qui combinent l'application d'un champ, soit électrique (CTS) soit mécanique (FTS) à une température donnée pour "orienter" les dipoles dans le matériau (CTS), ou les fragments de chaîne (FTS) dans le but de révéler leur existence lors d'un réchauffement contrôlé après refroidissement sous application d'une contrainte.

Une variante importante de la technique de courant thermo-stimulé et de fluage thermo-stimulé a été récemment présentée par le laboratoire de Physique des Solides à Toulouse France. Ces chercheurs, avec Pr. Lacabanne à leur tête, se sont concentrés à l'application de la méthode des "filtres thermiques" dans le but d'isoler les relaxations individuelles à partir d'un spectre complexe coopératif. La méthode consiste à appliquer un champ perturbateur, d'origine électrique, ou mécanique, pour orienter dans les matériaux ce qui est orientable à la température choisie Tₚ. La température est ensuite abaissée de quelques degrés, sous champ, suffisamment pour que la cinétique à la température d'abaissement T_{d} soit différente. Le champ excitateur est alors supprimé, et le matériau préalablement orienté est libre de revenir à son état d'équilibre à cette nouvelle température. Cependant, le choix du temps d'orientation à la température d'excitation Tₚ et le temps de relaxation à la température de rétablissement T_{d} sont tels que le matériau n'a pu être orienté complètement à Tₚ, et n'a pu se relaxer complètement à T_{d}, et qu'il a donc été possible d'isoler un mode de relaxation de type Debye parmi les modes de relaxation couplés constituant le spectre de relaxation complexe, responsable de la réponse globale du matériau. Le refroidissement à basse température après le rétablissement partiel à T_{d}, pendant t_{d} secondes, a pour but de geler le mode élémentaire isolé dans la fenêtre de température (Tₚ - T_{d}). Le réchauffement ultérieur, à vitesse de chauffe contrôlée, révèle la cinétique élémentaire du mode de relaxation isolé dans la fenêtre (Tₚ - T_{d}). Quand les temps d'orientation à Tₚ, et de relaxation à T_{d} sont ajustés, la courbe obtenue lors d'un réchauffement contrôlé, sans application d'un champ quelconque, d'origine mécanique, électrique, etc... donne un pic de rétablissement du type Debye, qui peut être analysé directement pour donner les paramètres d'enthalpie d'activation et d'entropie d'activation pour ce mode isolé de relaxation.

En changeant la valeur de Tₚ, aux alentours d'une température de relaxation globale observée par l'analyse (CTS) ou (FTS), il est possible d'isoler un à un tous les modes de relaxation qui coopèrent de façon interactive et contribuent à la réponse globale observée sans "filtrage thermique".

Toutefois, les méthodes d'analyse par effet thermo-stimulé représentent des effets négatifs majeurs :
- la méthode par courant thermo-stimulé ne s'applique pas aux matériaux conducteurs ou semi-conducteurs, dont la résistance est supérieure à 10⁺⁷ Ω/mètre d'épaisseur.
- la méthode par fluage thermo-stimulé s'applique difficilement aux matériaux pâteux ou liquides et ne permet pas d'accéder aux températures proches de la fusion des matériaux.
- Il n'existe pas de corrélation de dépendance simple entre les spectres de distribution des temps de relaxation obtenus par les analyses (CTS) et (FTS). Le mode de couplage entre les distributions des temps de relaxation d'ordre mécanique ou électrique semble complexe.
- De plus, la méthode thermo-stimulée par excitation externe (autre que par l'effet de la température), par courant de dépolarisation ou par rétablissement thermo-stimulé après fluage à une certaine température, semble perturber l'état structurel de l'échantillon, par la nature de l'expérience elle-même. En effet, la méthode de courant ou de fluage thermo-stimulé consiste à appliquer un champ électrique ou mécanique à une température Tₚ proche de la température à laquelle les mouvements internes s'effectuent. L'effet d'amener le matériau à cette température Tₚ permet à ce dernier de se relâcher de ses contraintes internes, si elles sont présentes, ou de modifier son taux de cristallinisation, s'il est susceptible de cristalliser, ou encore de modifier son degré de pontage pour des résines thermo-durcissables. Il est donc clair que les méthodes thermo-stimulées sont limitées à l'étude des mouvements internes qui ne sont pas perturbés par des changements morphologiques à la température d'analyse Tₚ.

L'inconvénient majeur de la microcalorimétrie différentielle ou de l'analyse thermique différentielle est que la réponse de l'instrument est une réponse globale qui traduit les mouvements coopératifs entre plusieurs relaxations internes. Un autre inconvénient majeur est la faible sensibilité pour la détection des mouvements internes "secondaires" pour lesquels l'enthalpie d'activation est faible. Enfin, cette technique présente également des problèmes pour l'étude de certains phénomènes tels l'orientation des matériaux plastiques ou bien les phénomènes de vieillissement physique. Il n'est pas rare d'observer des variations importantes dans les propriétés mécaniques de matériaux plastiques, et ne pas observer de différence sur les traces correspondantes en analyse DSC. La microcalorimétrie différentielle semble ne pas être sensible aux contraintes internes relâchées cinétiquement lors du vieillissement physique.

Un autre inconvénient majeur des méthodes thermo-stimulées en général pour l'étude du vieillissement physique ou l'étude des contraintes internes dues à l'application d'un champ mécanique lors du refroidissement du matériau, est qu'il faut changer d'échantillon pour chaque température Tₚ, ce qui rend la méthode d'analyse longue et coûteuse : en effet, le technicien qui utilise la cellule d'analyse (CTS) ou (FTS) doit préparer plusieurs échantillons et les introduire en série l'un après l'autre, monter en température jusqu'à Tₚ, appliquer le champ, redescendre en température jusqu'à une basse température, supprimer le champ, réchauffer pour recouvrir les mouvements internes activés par le champ, puis redescendre en température pour remettre un nouvel échantillon, réchauffer jusqu'à une nouvelle température Tₚ, recommencer le processus précédent pour chaque température jusqu'à obtention du spectre complet de relaxation. Cette méthode d'analyse pour l'isolation des modes simples dans les matériaux ayant des contraintes internes requiert un grand nombre d'échantillons et de main-d'oeuvre, en particulier à cause de la vitesse de réchauffe lors du rétablissement qui est limitée à des faibles vitesses, de l'ordre de 5 à 7 degrés/minute. Un autre inconvénient majeur est que la cellule d'analyse (FTS) est différente de la cellule d'analyse (CTS), et les deux méthodes ne peuvent être employées simultanément sur le même échantillon.

Les méthodes d'analyse basées sur la résonance et l'amortissement interne sont des méthodes globales qui ne permettent pas d'isoler les modes de relaxation élémentaires, et se contentent d'obtenir sur les diagrammes d'Arrhénius des activations d'énergie "apparentes" (souvent bien trop grandes) qui traduisent le fait que les mouvements internes observés sont couplés et que la réponse de l'appareil résulte du couplage coopératif entre plusieurs relaxations se produisant en même temps.

La présente invention a pour but de remédier aux inconvénients des procédés connus d'analyses des spectres de relaxation et des résonances dans les matériaux pour thermo-stimulation suivant un programme de variation de température et se propose de créer un procédé efficace, d'application relativement générale, s'appliquant à l'étude de matériaux très divers et différents quant à leur nature et leur état et permettant une analyse rapide et précise.

A cet effet, l'invention concerne un procédé de type décrit dans la demande de brevet DE-A-3511778 et énoncé dans le préambule caractérisé en ce qu'on applique à l'échantillon de matériau analysé au moins deux champs d'excitation couplés.

Suivant une autre caractéristique, les champs d'excitation sont choisis dans le groupe formé par des champs d'excitation électriques (tension mécaniques (pression hydrostatique, force) magnétiques.

Suivant une autre caractéristique, on procède à une détection thermique en microcalorimétrie différentielle à balayage à l'aide d'au moins deux échantillons, que l'on met à la même température mais à deux pressions différentes.

Suivant une autre caractéristique, dans le code du procédé ci-dessus, les pressions évoluent dans le temps suivant un programme.

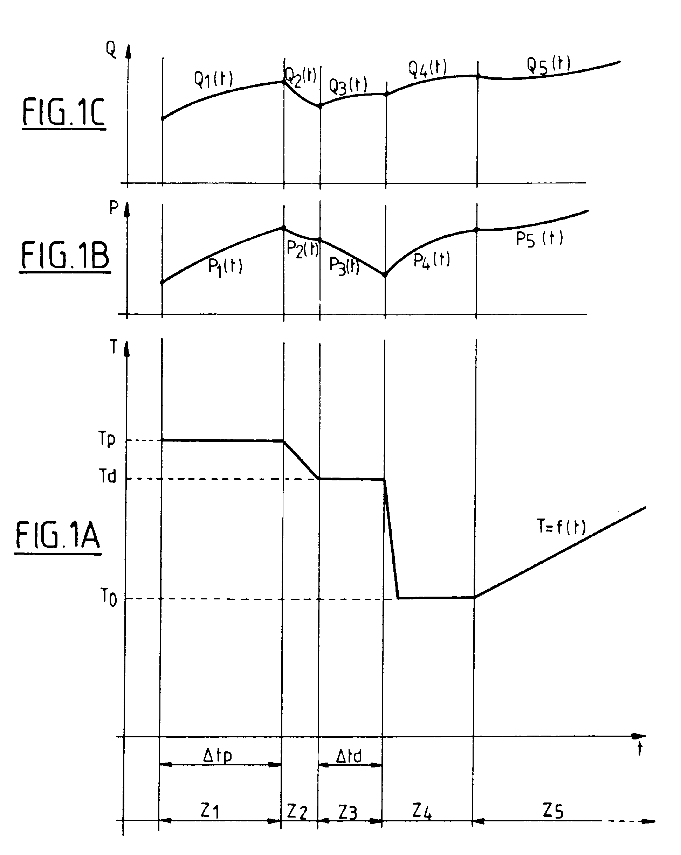

La présente invention sera décrite de manière plus détaillée à l'aide des dessins annexés dans lesquels l'unique figure qui se compose des parties de figure 1a, 1b, 1c est un diagramme d'analyse.

Selon l'invention, le procédé d'analyse des spectres de relaxation et des résonances dans les matériaux, on fait varier la température T en fonction du temps t suivant un programme déterminé figure (1a).

Ainsi l'échantillon de matériau analysé est mis à une température de polarisation TP à laquelle séjourne l'échantillon pendant une durée Δtp. Puis on abaisse de quelques degrés cette température pour arriver à la température de dépolarisation Td.

L'échantillon séjourne à cette température pendant la durée Δtd.

A la fin de la période de dépolarisation l'échantillon subit une trempe thermique pour le mettre à la température Tₒ et à partir de cette température on commande une variation de température T = f(t) par exemple une augmentation linéaire. Ainsi, en cours d'analyse, la température évolue de manière programmée. Cette évolution peut se répartir en 5 zones Z₁, Z₂, Z₃, Z₄, Z₅.

Pendant cette variation de température l'échantillon de matériau est soumis à l'action d'au moins deux champs d'excitation P(t) et Q(t) (figure 1b, figure 1c) qui sont couplés. Les champs d'excitation varient dans le temps t de manière programmée.

Dans chaque zone Z₁ - Z₅, l'évolution de chaque champ d'excitation P(t) et Q(t) est représentée par une portion de courbe P₁(t), Q₁(t) ; P₂(t), Q₂(t) ; P₃(t), Q₃(t) ; P₄(t), Q₄(t) ; P₅(t), Q₅(t).

Les différentes portions de courbe peuvent être continues ou discontinues en fonction du type de matériau analysé et de la nature de l'analyse.

Les champs d'excitation appliqués à l'échantillon de matériau analysé peuvent être des champs électriques, magnétiques ou mécaniques tels qu'un champ de tension électrique, un champ magnétique, une force mécanique ou une pression hydrostatique.

Le couplage des champs d'excitation est fait pour isoler des modes de relaxation simples.

De manière plus particulière, dans le procédé d'analyse de l'invention, la température varie en fonction du temps suivant un programme analogue à ceux décrits dans les méthodes thermo-stimulées (CTS, FTS), avec ou sans les variantes correspondant aux "filtres thermiques" pour l'isolation des modes de relaxation simples. Cependant, le procédé couple et superpose l'effet d'au moins deux champs d'excitation pendant le déroulement du programme de variation en température. Le couplage peut se faire entre deux variables susceptibles de modifier individuellement la cinétique de rétablissement associée aux mouvements internes que l'on cherche à mettre en évidence. Par effet de couplage entre plusieurs types d'excitation l'invention permet de caractériser et d'isoler les interactions entre les cinétiques de mouvements locaux (tel des relaxations de dipoles) et les mouvements globaux, tel qu'une relaxation mécanique ou visqueuse.

Par exemple, dans un mode de réalisation, le couplage s'effectue entre un champ électrique (tension) appliqué au matériau à une certaine température, et un champ mécanique appliqué en même temps. La variable mécanique peut être une pression hydrostatique ou une force. La variable mesurée lors du rétablissement peut être soit le courant électrique, soit le déplacement (comme dans le cas du FTS) soit les deux. Le couplage entre les champs d'excitation appliqués permet de comprendre l'origine de la différence entre les temps de relaxation diélectriques et les temps de relaxation mécaniques, et de déterminer les lois de couplage entre ces mouvements internes. Le "profil" d'excitation décrit la manière avec laquelle on applique les champs d'excitation de façon à amener le matériau hors d'équilibre entre les températures Tₚ et T_{d}. Le profil d'excitation des champs des types de variable en question peut être identique pour chaque variable, ou décalé l'un par rapport à l'autre de manière à mettre en évidence telle ou telle particularité de la cinétique de rétablissement.

Dans un autre mode de réalisation de l'invention, la pression dans l'enceinte de mesure d'un appareil d'analyse CTS ou FTS varie en couplage soit avec la tension (CTS) soit avec la contrainte de cisaillement (FTS), ou pour d'autres types de mesure utilisant l'application de champ magnétique, avec le champ magnétique lui-même. Dans ce cas il est à noter l'effet particulier joué par la pression et la variation de la pression car la pression peut être programmée de façon à jouer le même rôle que la température, en particulier pour créer des "fenêtres" (P_{d} - Pₚ) dans le but d'isoler des modes de relaxation rhéologiquement simples.

La pression peut être augmentée à la température T_{d} (température de dépolarisation) de façon à retarder le rétablissement de certains des temps de relaxation influencés par la pression et la température. Si le mouvement des dipoles, activés par la tension d'excitation, est également influencé par la pression, le couplage pression-voltage permet plus rapidement que pour une analyse CTS normale, d'obtenir les spectres de relaxation. En d'autres termes, le "filtrage thermique" peut être effectué par d'autres moyens que par abaissement de la température.

Dans l'exemple ci-dessus, la pression est présentée comme une variable susceptible de stimuler un changement d'état du matériau autour de transitions, mais l'application de vibrations de nature mécanique, électrique ou électromagnétique, etc..., peut servir le même objectif. En effet, l'application d'une vibration sur un matériau permet de révéler la présence des transitions ou des mouvements internes. De plus, comme la température de transition augmente lorsque la fréquence de vibration augmente, ce phénomène de déplacement de la température à laquelle se produisent les mouvements internes, pour une température de matériau, donnée, est équivalente à un abaissement de température par rapport à la température de transition. Une augmentation de la fréquence de vibration entre deux niveaux est équivalente, pour les phénomènes activés, à une diminution de température ; cela peut à nouveau être utilisé pour définir des "fenêtres" analogues à celles créées pour le "filtrage thermique". Les couplages entre fenêtres thermiques (créés par changement de température) et les fenêtres stimulées, (créés par action d'un champ vibratoire ou par effet de pression hydrostatique) permet de discerner sans aucun doute les mouvements d'origine locales par rapport aux mouvements d'origine globale (mouvements de nature visqueuse).

Il est à noter que la vibration appliquée lors du stade d'excitation (à la température de polarisation Tₚ ou de dépolarisation T_{d}) peut être de même nature ou de nature différente que celle du champ appliqué par ailleurs à Tₚ, et que les moyens de détection du signal de rétablissement lors de la remontée programmée de la température (pour révéler un mode de relaxation), peuvent porter sur la variable excitée par le champ fixe, ou celle excitée par le champ vibratoire. Par exemple, il est possible d'envisager des couplages entre un champ d'origine mécanique (pression hydrostatique ou contrainte de cisaillement appliquée pendant un temps tₚ) appliqué à la température Tₚ au champ vibratoire de nature électrique ou électromagnétique (champ de fréquence et d'amplitude déterminées), appliqué à Tₚ ou à T_{d} pendant un temps programmé. La courbe de rétablissement peut être étudiée sur des variables soit électriques (mesure de courant de dépolarisation), soit mécanique (variation des dimensions de l'échantillon), soit thermique (mesure de capacité calorifique).

Dans un mode de réalisation particulièrement important de l'invention, des moyens de détection thermique de microcalorimétrie différentielle à balayage sont utilisés pour la détection de la courbe de rétablissement. L'enceinte comportant les échantillons est divisée en deux compartiments, l'un à la pression P₁, l'autre à la pression P₂. Les deux compartiments sont rigoureusement à la même température quelle que soit la température, que ce soit lors de l'excitation ou lors du rétablissement. Dans un mode de réalisation particulier du montage précédent, seulement deux coupelles sont situées dans chaque compartiment, l'une des coupelles étant occupée par le matériau à analyser.

Dans une variante, dans le cadre de l'exemple ci-dessus, les compartiments peuvent accueillir plusieurs coupelles, chacune occupée par un échantillon du matériau à analyser en plus d'un échantillon de référence. Cette configuration est particulièrement adaptée à l'étude des phénomènes de vieillissement physique lié à l'évolution des contraintes internes dans le matériau.

Les flux énergétiques, ajustés pour conserver constante la température de toutes les coupelles, quel que soit le compartiment, le nombre de coupelles ou le programme en température ou en pression, sont enregistrés et comparés automatiquement. Les programmes de variation de température et de pression sont déterminés de façon à créer des fenêtres qui séparent sur tel ou tel mode de relaxation, à condition qu'il soit décelable par changement d'enthalpie. La comparaison des flux énergétiques fournis aux coupelles peut être effectuée pour des coupelles à l'intérieur d'un même compartiment ou bien pour des coupelles contenant des échantillons de provenance identique mais dans deux compartiments différents.

L'effet de la pression différentielle entre les échantillons dans les compartiments est d'augmenter l'écart hors équilibre de façon à accroître la réponse calorimétrique ; plus le système est porté hors équilibre initialement, plus grande est l'intensité du signal de la mesure calorimétrique ; la création des "fenêtres" a tendance à diminuer l'intensité du signal à mesurer par élimination d'un certain nombre de relaxations qui participent au phénomène global et contribuent à l'intensité du signal). La pression peut être programmée dans le temps de façon à étudier une transition (par exemple la transition vitreuse des matériaux polymérisés), à différentes températures. En effet, l'action de la pression hydrostatique sur le matériau peut être utilisé pour "créer" à volonté un effet de transition, puisque la transition elle-même s'effectue à plus haute température si l'on augmente la pression. On peut donc soumettre l'échantillon à une série de mise sous pression rapide, (stimulant des trempes) faisant passer l'échantillon en-dessous de sa température de transition (s'il se trouvait au-dessus), et relâcher la pression suivant une vitesse contrôlée pour analyser la courbe cinétique de changement d'état caractérisant la transition ou les mouvements moléculaires. Ce processus de mise en pression-détente peut s'effectuer plusieurs fois au cours de la montée lente de la température dans l'enceinte, stimulant ainsi une série de trempes suivies de rétablissements à partir de différents états rhéologiques initiaux du matériau. Ce type d'analyse permet de comprendre les phénomènes thermo-cinétiques de modulation et de couplage dont résultent les spectres de relaxation pour lesquels existe une distribution d'énergie d'activation et d'entropie d'activation.

Dans un autre mode de réalisation de l'invention, pour un couplage entre un champ mécanique et une pression hydrostatique, plusieurs échantillons à comparer peuvent être introduits en même temps dans la cellule pour être soumis simultanément aux mêmes programmes de mise sous pression et aux mêmes variations de température. Les réponses obtenues simultanément sur les divers échantillons lors du rétablissement permettent de comparer très rapidement et en une seule manipulation les différences existant initialement dans les matériaux. Ceci est particulièrement utile pour étudier les contraintes internes figées dans un objet pour lequel ces contraintes varient d'un point à l'autre de l'objet à cause des conditicns de moulage. Par exemple, dans les procédés de fabrication de compact-disques, ou de disques optiques par moulage par injection, il est important d'éliminer les contraintes internes dans la direction parallèle au rayon laser de lecture. Il est aussi primordial que les propriétés du matériau ne varient pas dans le temps et de point en point, dans la direction radiale.

Le procédé d'analyse de l'invention peut être mis en application pour l'étude simultanée de plusieurs échantillons dans le but de déterminer une courbe d'intensité de contrainte interne.

Enfin, dans un autre mode de réalisation de l'invention, le champ d'excitation appliqué pendant la fenêtre est d'origine électromagnétique ou corpusculaire, par exemple lumineux ou sub-rayonnant (rayons X, γ, UV etc...). Ce mode d'excitation peut être plus approprié à l'analyse des couches minces de matériaux conducteurs ou semi-conducteurs, en particulier pour sonder les différents niveaux dont est composé l'énergie globale.

## Revendications

1. Procédé d'analyse des spectres de relaxation et des résonances dans les matériaux, par thermo-stimulation suivant un programme ce variation de température en fonction du temps, caractérisé en ce qu'on applique à l'échantillon de matériau analysé au moins deux champs d'excitation couplés (P(t)), (Q(t)).

2. Procédé suivant la revendication 1, caractérisé en ce que les champs d'excitation sont choisis dans le groupe formé par des champs d'excitation électriques (tension), mécaniques (pression hydrostatique, force), magnétiques, électromagnétiques y compris par rayonnement.

3. Procédé selon l'une quelconque des revendications 1 et 2, caractérisé en ce qu'on procède à une détection thermique en microcalorimétrie différentielle à balayage à l'aide d'au moins deux échantillons, que l'on met à la même température mais à deux pressions différentes.

4. Procédé selon la revendication 3, caractérisé en ce que les pressions évoluent dans le temps suivant un programme.

5. Procédé selon les revendications 1, et 2, caractérisé en ce que les champs d'excitation sont oscillatoires.

## Patentansprüche

1. Verfahren zur Untersuchung von Relaxationspektren und Resonanzen in Materialien durch Thermostimulation nach einem Programm der Änderung der Temperatur in Funktion von der Zeit, dadurch gekennzeichnet, daß man an ein Probestück des untersuchten Materials wenigstens zwei gekoppelte Erregungsfelder (P(t)), (Q(t)) anlegt.

2. Verfahren nach Anspruch 1, dadurch gekennzeichnet, daß die Erregungsfelder aus der folgenden Gruppe ausgewählt sind: elektrische Erregungsfelder (Spannung), mechanische Erregungsfelder (hydrostatischer Druck, Kraft), magnetische Erregungsfelder, elektromagnetische Erregungsfelder einschließlich Strahlung.

3. Verfahren nach Anspruch 1 oder 2, dadurch gekennzeichnet, daß man an eine thermische Feststellung gemäß differenzieller Mikrokalometrie durch Abtastung mit Hilfe wenigstens zweier Probestücke geht, die man auf gleiche Temperatur, jedoch unter zwei unterschiedliche Drücke setzt.

4. Verfahren nach Anspruch 3, dadurch gekennzeichnet, daß sich die Drücke zeitlich nach einem Programm entwickeln.

5. Verfahren nach Anspruch 1 und 2, dadurch gekennzeichnet, daß die Erregungsfelder oszillierend sind.

## Claims

1. Process for analysing the relaxation spectra and resonances in materials by thermo-stimulation according to a programme of temperature variation depending on time, characterised in that at least two coupled energising fields (P(t)), (Q(t)) are applied to the sample of analysed material.

2. Process according to claim 1, characterised in that the energising fields are selected from the group made up of energising fields which are electric (voltage), mechanical (hydrostatic pressure, force), magnetic, electromagnetic (including by radiation).

3. Process according to any one of claims 1 and 2, characterised in that a thermo-detection process is then carried out by differential scanning microcalorimetry with the aid of at least two samples which are subjected to the same temperature but to two different pressures.

4. Process according to claim 3, characterised in that the pressures develop in time according to a programme.

5. Process according to claims 1 and 2, characterised in that the energising fields are oscillatory.
